# EUROPÄISCHE PATENTANMELDUNG

(11) **EP 2 497 349 A1**
(43) Veröffentlichungstag der Anmeldung: **12.09.2012**
(21) Anmeldenummer: 12401030.7
(22) Anmeldetag: 02.03.2012
(51) Int. Cl.: A01C 7/04, A01C 7/08

(54) **Pneumatische Einzelkornsämaschine**

(30) Priorität: 08.03.2011 DE 102011001143
(71) Anmelder: Amazonen-Werke H. Dreyer GmbH & Co. KG, 49205 Hasbergen (DE)
(72) Erfinder: Mertens, Daniel, 26135 Oldenburg (DE); Wilken, Martin, 26123 Oldenburg (DE)

(57) **Zusammenfassung**

Pneumatische Einzelkornsämaschine mit einem Nachfüllsystem für zumindest einem mit einem Überdruck beaufschlagten, einen Saatgutvorratsbehälter aufweisenden Vereinzelungsgehäuse (2) einer landwirtschaftlichen Einzelkornsämaschine, wobei dem Vereinzelungsgehäuse (2) zumindest eine mit einer Druckdifferenz beaufschlagte Vereinzelungstrommel (3) zugeordnet ist, wobei die Vereinzelungstrommel (3) in Perforationsreihen angeordnete Perforationen (7) aufweist, an denen sich die Saatkörner (8) bei der Durchführung der Perforationen (7) durch den Saatgutvorratsbehälterbereich anlagern, wobei dem Vereinzelungsgehäuse (2) mittels zumindest einer pneumatisch beaufschlagten und oberhalb des Saatgutvorratsbehälterbereiches im Vereinzelungsgehäuse (2) ausmündenden Nachfüllleitung (5) das sich in einem Vorratsbehälter befindliche Saatgut zugefördert wird. Um den Nachfüllvorgang zu vereinfachen und gleichzeitig eine gute Vereinzelung und Anlagerung der zu vereinzelnden Saatkörner (8) zu gewährleisten, ist vorgesehen, dass über die pneumatische Nachfüllleitung (5) ein ständig aufrechterhaltener Überdruck in dem Vereinzelungsbereich des Vereinzelungsgehäuses (2) erzeugt wird, so dass über die Nachfüllleitung (5) in ununterbrochener Weise zumindest teilweise die an den Perforationen (7) der Vereinzelungstrommel (3) anliegende Druckdifferenz erzeugbar ist, dass dem Vereinzelungsgehäuse (2) eine Vorrichtung (21,22) zur Erzeugung eines Fließbettes des Saatgutes zumindest im unteren Anlagerungsbereich des Saatgutes an der Vereinzelungstrommel (3) zugeordnet ist, dass von dem Bereich oberhalb der Einmündung der Nachfüllleitung (5) in den Vorratsbehälter (4) eine mit Druckluft aus dem Vorratsbehälterbereich und/oder Nachfüllleitung (5) beaufschlagte Verbindungsleitung (23) zu der Vorrichtung (21,22) zur Erzeugung des Fließbettes des Saatgutes führt, dass der Bereich, in dem die die Vereinzelungstrommel (3) angeordnet ist, durch eine Trennwand, (16) der zumindest ein einstellbares Ventilelement (28,31) zugeordnet ist, von Saatgutvorratsbehälterbereich im oberen Bereich des Vereinzelungsgehäuses (2) getrennt ist.

## Beschreibung

Die Erfindung betrifft eine pneumatische Einzelkornsämaschine gemäß des Oberbegriffes des Patentanspruches 1.

Eine derartige pneumatische Einzelkornsämaschine mit einem Nachfüllsystem ist beispielsweise durch die EP 2 044 827 A2 bekannt. Der dem Vereinzelungsorgan zugeordnete Aufnahmebereich für den Saatgutvorrat ist relativ klein ausgestaltet. Um nun jedoch große Flächenleistung zu erreichen zu können, ist ein Vorratstank mit großem Fassungsvermögen vorgesehen, von dem aus über eine Zufuhrschleuse das Saatgut in eine pneumatisch beaufschlagte Förderleitung eingespeist wird. Diese Förderleitung ist als Nachfüllleitung ausgebildet und mündet im oberen Bereich des den Saatgutvorrat im Bereich des Vereinzelungsgehäuses aufnehmenden Saatgutvorratsbehälters aus. Das Nachfüllen des Saatgutvorratsbehälters mit Saatgut findet immer beim Wendevorgang statt. Hierzu wird bei dem bekanten Nachfüllsystem die Druckdifferenz, mit der das Vereinzelungsorgan beaufschlagt wird, und der Luftdruck in den nachzufüllenden Saatgutvorratsbehälter im Bereich des Vereinzelungsorgans abgesenkt. Während der abgesenkten Luftdruckphase während des Wendevorganges am Feldende wird dann Saatgut über die Einfüllschleuse aus dem Vorratstank in die Nachfüllleitung eingespeist und über diese in dem Saatgutvorratsbehälter geleitet.

Dieser Vorgang der diskontinuierlichen Nachfüllung ist nur beim Wendevorgang möglich.

Der Erfindung liegt die Aufgabe zugrunde, den Nachfüllvorgang zu vereinfachen und gleichzeitig eine gute Vereinzelung und Anlagerung der zu vereinzelnden Saatkörner zu gewährleisten. Diese Aufgabe wird erfindungsgemäß durch die kennzeichnenden Merkmale des Patentanspruches 1 gelöst. Infolge dieser Maßnahme ist eine kontinuierliche Nachförderung des Saatgutes in dem Vorratsbehälter in den Bereich des Vereinzelungsorgans im Vereinzelungsgehäuse auch während des Vereinzelungs- und Ausbringvorganges möglich. Hierbei wird die kontinuierliche Nachförderung während des Vereinzelungs- und Sävorganges dadurch möglich, dass die benötigte Luft zur Erzeugung der Druckdifferenz zur Vereinzelung der Saatkörner gleichzeitig zur Nachfüllung genutzt wird. Durch den entsprechend ausreichend hohen Luftdruck in der Nachfüllleitung, die dem Luftdruck zur Erzeugung der Druckdifferenz an den Perforationen entspricht, ist es also in überraschender Weise möglich, kontinuierlich während des Vereinzelungs- und Säausbringvorganges das Saatgut kontinuierlich nachzufördern. Diese kontinuierliche Förderung des Saatgutes ist dadurch möglich, dass der von der Nachfüllleitung erzeugte Luftdruck dem Luftdruck im Vereinzelungsbereich der Trommel während des Vereinzelungsvorganges der Saatkörner während der Ausbringarbeit zumindest annähernd entspricht. Die zur Nachfüllung des Saatgutes genutzte Luft wird somit energetisch zur Erzeugung der Druckdifferenz weiter genutzt. Eine einfache Ausgestaltung des Nachfüllvorganges während des Sä- und Vereinzelungsvorganges lässt sich dadurch erreichen, dass die Nachfüllleitung unmittelbar ohne Zwischenschaltung eines gegenüber dem Saatgutvorratsbehälterbereich des Vereinzelungsgehäuses absperrbaren Zwischenbehälters ausmündet.

Eine gute Anlagerung und eine gute Vereinzelung der Saatkörner durch die Vereinzelungstrommel wird mittels eines fließbettartigen Saatgutvorrates im Bereich der Vereinzelungstrommel erzielt. Der fließbettartige Saatgutvorrat wird im Anlagerungsbereich über eine Luftstromaufteilung durch das der Trennwand zugeordnete Ventilelement erreicht. Mittels dieses Ventilelementes lässt sich das Verhältnis der Teilgröße des dem Bereich zur Erzeugung der Druckdifferenz an der Vereinzelungstrommel zugeführten Druckluftstromes zu der Teilgröße des Druckluftstromes, die der Vorrichtung zur Erzeugung des Fließbettes zugeleitet wird, entsprechend einstellen. Je nach zu vereinzelndem Saatgut wird das Verhältnis der Teilströme zueinander eingestellt, damit ein Fließbett des Saatgutes im Anlagerungsbereich in optimierter Weise zu erzeugen ist. Bei der Vorrichtung zur Erzeugung des Fließbettes zu viel zu geführter Druckluft entsteht kein Fließbett, sondern die Saatkörner werden in einem hohen Maße durcheinander gewirbelt, man spricht dann von einem "Sprudeln" des Saatgutes. Bei zu wenig der Vorrichtung zur Erzeugung des Fließbettes zu geführter Druckluft entsteht ebenfalls kein Fließbett, sondern die Saatkörner bleiben "dicht gepackt" liegen; es findet keine Unterstützung zur verbesserten und erleichterten Anlagerung der Saatkörner an den Perforierungen der Vereinzelungstrommel statt.

Eine einfache Ausgestaltung des Ventilelementes ergibt sich dadurch, dass das Ventilelement als zumindest eine um eine Achse verschwenkbaren Drosselklappe ausgebildet ist. Eine derartig ausgestaltete Drosselklappe lässt sich einfach und feinfühlig auf die vorherrschenden Bedingungen einstellen. Somit kann das Verhältnis der Teilströme zueinander gut eingestellt werden.

In einer weiteren Ausgestaltung ist vorgesehen, dass das Ventilelement als Schieberventil ausgebildet ist.

Insbesondere, wenn zumindest die eine Kante des Schieberventils schräg verlaufend ausgestaltet ist, lässt sich mit einem derartigen Schieberventil eine feinfühlige Einstellung und Aufteilung der Teilströme zueinander gewährleisten.

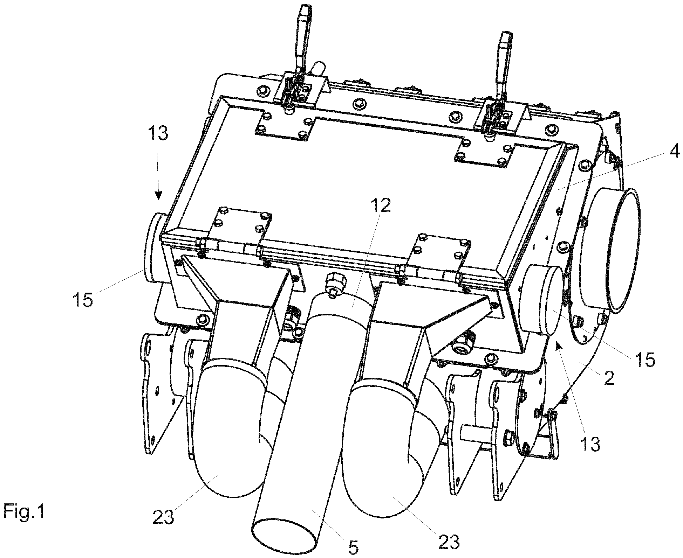

Weitere Einzelheiten der Erfindung sind der Beispielsbeschreibung und den Zeichnungen zu entnehmen. Hierbei zeigen
- Fig. 1: das erfindungsgemäße Nachfüllsystem in Prinzipdarstellung und in perspektivischer Darstellung,
- Fig. 2: das erfindungsgemäße Nachfüllsystem in Prinzipdarstellung und in anderer perspektivischer Darstellung,
- Fig. 3: das erfindungsgemäße Nachfüllsystem in Prinzipdarstellung und in Seitenansicht,
- Fig. 4: die Vereinzelungs- und Zuführbereich in Seitenansicht und vergrößertem Maßstab,
- Fig. 5: die Vereinzelungs- und Zuführbereich in Seitenansicht und vergrößertem Maßstab mit einem anderen Saatgutfüllstand im Saatgutzuführschacht,
- Fig. 6: das Ventilelement in vergrößertem Maßstab und in Seitenansicht,
- Fig. 7: das Ventilelement in einer anderen Einstellung in vergrößertem Maßstab und in Seitenansicht,
- Fig. 8: eine Trennwand mit als balkenartige Erhebungen ausgestaltete den Saatgutfluss bremsende Elemente,
- Fig. 9: eine weitere Trennwand mit als kegelstumpfförmige Erhebungen ausgestaltete den Saatgutfluss bremsende Elemente und
- Fig. 10: eine weitere Trennwand mit als zylinderförmige Erhebungen ausgestaltete den Saatgutfluss bremsende Elemente.

Das erfindungsgemäße Nachfüllsystem für den Saatgutvorratsbereich 1 einer Einzelkornsämaschine, die mit einem Drucksystem arbeitet, weist die in einem Vereinzelungsgehäuse 2 angeordnete Vereinzelungstrommel 3, einen Saatgutvorratsbehälter 4, eine pneumatisch beaufschlagte Nachfüllleitung 5 auf. Die Nachfüllleitung 5 wird von einem motorisch angetriebenen nicht dargestellten Gebläse mit einem Luftüberdruck gegenüber dem Atmosphärendruck beaufschlagt. Der Nachfüllleitung 5 wird über eine Dosiereinrichtung aus einem nicht dargestellten Vorratstank das auszubringende Saatgut in einstellbarer Weise zugeleitet.

Die Vereinzelungstrommel 3 weist in Perforationsreihen 6 angeordnete Perforationen 7 auf, die aufgrund über die Nachfüllleitung 5 zugeführte Luft mit einer Druckdifferenz gegenüber dem Atmosphärendruck beaufschlagt werden. An den Perforationen 7 der Vereinzelungstrommel 3 lagern sich aufgrund der anliegenden Druckdifferenz die Saatkörner 8 aus dem Saatgutvorrat 9 des Saatgutvorratsbereiches 1 des Saatgutvorratsbehälters 4 innerhalb des Vereinzelungsgehäuses 2 an.

Mittels des von dem Gebläse erzeugten Luftstromes und des hieraus resultierenden Luftdruckes, der über die Nachfüllleitung 5 in den Vereinzelungsbereich 10 des Vereinzelungsgehäuses 2 geleitet wird, wird die erforderliche Druckdifferenz an den Perforationen 7 der Vereinzelungstrommel 3 erzeugt.

Der Nachfüllleitung 5 ist im Bereich des nicht dargestellten Vorratstanks und der Dosiereinrichtung eine nicht dargestellte Eingabeschleuse zugeordnet, über welche das sich in dem Vorratstank, der getrennt von dem Saatgutvorratsbehälter und dem zugeordneten Vereinzelungsgehäuse 2 angeordnet ist, das sich in dem Vorratstank befindliche Saatgut in die Nachfüllleitung 5 eingespeist wird. Mittels der pneumatischen Nachfüllleitung 5 wird ein ständig aufrecht erhaltener Überdruck in dem Vereinzelungsbereich 10 des Vereinzelungsgehäuses 2 in dieser Weise erzeugt, um die Druckdifferenz an den Perforationen 7 der Vereinzelungstrommel 3 zu erzeugen. Somit wird über die Nachfüllleitung 5 in ununterbrochener Weise zumindest teilweise die an den Perforationen der Vereinzelungstrommel 3 anliegende Druckdifferenz erzeugt. Der von der Nachfüllleitung 5 erzeugte Luftdruck entspricht zumindest annähernd dem Luftdruck im Vereinzelungsbereich 10 der Trommel 3 während des Vereinzelungsvorganges der Saatkörner 8 bei der Ausbringarbeit.

Wie insbesondere der Fg. 2 und 3 zu entnehmen ist, mündet die Nachfüllleitung 5 im oberen Bereich 11 des Vereinzelungsgehäuses 2 in der Weise aus, dass das Saatgut in den Saatgutvorratsbehälterbereich 1 des Vereinzelungsgehäuses 2 gelangt.

Der Saatgutvorratsbehälter 4 weist mehrere Zufuhröffnungen 12, 13 und 14 für den Anschluss der Nachfüllleitung 5 auf. Im Ausführungsbeispiel ist die Nachfüllleitung 5 luftdicht an die mittlere Zufuhröffnung 12 angeschlossen. Die Zufuhröffnung 12 ist in der Vorderwand des Saatgutvorratsbehälters 4 angeordnet. Die Zufuhröffnungen 13 und 14 sind in den Wänden des Saatgutvorratsbehälters 4 angeordnet und mittels Verschlusselementen 15 luftdichte verschlossen.

Zwischen dem Saatgutvorratsbehälterbereich 11 und Vereinzelungstrommel 3 ist er die Trennwand 16 bis an eine Wand des Vereinzelungsgehäuses 2 geführt. Zumindest der obere Bereich der Trennwand 16 ist luftdurchlässig, beispielsweise siebartig oder als Lochblech 17 ausgebildet.

Das Sieb oder Lochblech 17 ist mittels lösbarer Verbindungen, beispielsweise Schraubverbindungen 18 an dem Vereinzelungsgehäuse 2 lösbar und austauschbar befestigt. Für unterschiedliche Saatgutsorten können so gegeneinander austauschbare Siebe und oder Lochbleche 17 mit verschieden großen Sieböffnungen zur Anpassung an unterschiedliche Saatgutarten vorgesehen sein.

Im unteren Bereich 19 des Saatgutvorratsbereiches 1 im Vereinzelungsgehäuse 2, welcher von Wandelementen 20 bebildet wird, ist im Bereich der Vereinzelungstrommel 3 das zumindest teilweise als Lochblech 21 ausgebildete Bodenelement angeordnet. Durch die Öffnungen 22 des Lochbleches 21 strömt Druckluft in den Vereinzelungsbereich 10 vor der Vereinzelungstrommel 3 hinein. Hierbei wird für das sich in diesem Bereich befindliche Saatgut im Bereich der Vereinzelungstrommel 3 eine Art Fließbett im unteren Anlagerungsbereich des Saatgutes an der Vereinzelungstrommel 3 zum erleichterten gleichmäßigen Anlagern der Samenkörner 8 an die Perforationen 6 erzeugt. Somit ist in dem unteren Bereich des Vereinzelungsgehäuses 2 im Vereinzelungsbereich 10 vor der Vereinzelungstrommel 3 eine Vorrichtung zur Erzeugung eines Fließbettes für das Saatgut angeordnet.

Die Druckluft zur Erzeugung des Fließbettes wird über Verbindungsleitungen 23 aus dem oberen Bereich 24 des Saatgutvorratsbehälters 2 über den Verteilerkanal 25, den Verbindungsschacht 26 bis zu dem siebartigen Bodenbereich oder des Lochbleches 17 geleitet. Hierbei führt von dem Bereich oberhalb der Einmündung 12 der Nachfüllleitung 5 in den Vorratsbehälter 4 von dem durch das Sieb oder Lochblech 16 von dem Saatgutvorratsbehälterbereich 11 getrennte obere Bereich 24 eine mit Druckluft aus dem Vorratsbehälterbereich 11 und oder der Nachfüllleitung 5 beaufschlagte Verbindungsleitung 23 zu der Vorrichtung zur Erzeugung des Fließbettes des Saatgutes, wie durch die die Luftführung symbolisierenden Pfeile 27 dargestellt ist.

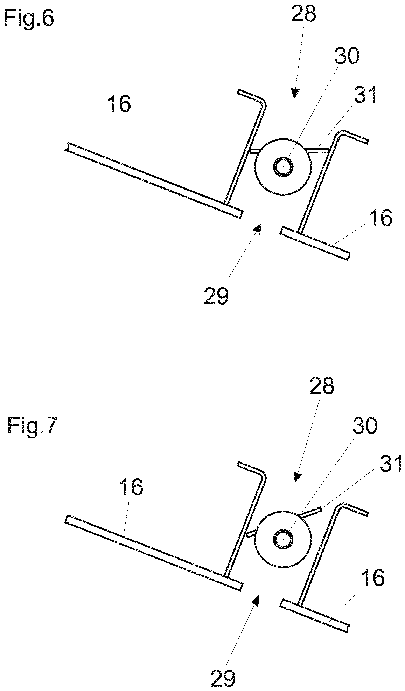

Weiterhin ist der oberen Trennwand 16 zwischen Saatgutvorratsbehälterbereich 11 und Vereinzelungsbereich 10 ein Ventilelement 28 zugeordnet. Dieses Ventilelement 28 ist in einer schlitzartigen Öffnung 29, welche in der Trennwand 16 angeordnet ist, angeordnet. Dieses Ventilelement 28 ist einstellbar. Das Ventilelement 18 ist im Ausführungsbeispiel als eine um eine Achse 30 verschwenkbare Drosselklappe 31 ausgebildet, wie die Fig. 6 und 7 zeigen. Mittels geeigneter ein Stellmittel kann die Drosselklappe 31 um die Achse 30 von Hand oder motorisch in die entsprechende Position eingestellt werden.

Über das Ventilelement 28 wird die Luftdruckmenge, die über die Nachfüllleitung 5 dem Saatgutvorratsbehälter 4 zugeführt wird, in einstellbarer Weise in zwei Mengenströme, wie durch die Pfeile 27 und 32 dargestellt ist, aufgeteilt. Der eine Mengenstrom, der durch die Pfeile 32 dargestellt wird, wird über die einstellbare Drosselklappe 31 dem oberen Vereinzelungsbereich der Vereinzelungstrommel 3 zur Erzeugung der Druckdifferenz an den Perforationen 4 der Vereinzelungstrommel 3, während der andere Mengenstrom, der durch die Pfeile 27 dargestellt wird, über Verbindungsleitungen 23 und dem Schacht 26 dem Lochblech 21 oder Sieb zur Erzeugung des Fließbettes des Saatgutes zugeleitet wird.

Anstelle der Drosselklappe 31 kann auch ein einstellbares Schieberventil in nicht dargestellter Weise verwendet werden.

Der Saatgutschacht 26 ist durch eine Trennwand 32 von dem Vereinzelungsbereich 10, der der Vereinzelungstrommel 3 zugeordnet ist, abgetrennt. Somit trennt die Trennwand 32 den Saatgutvorratsbehälter 4 von dem Vereinzelungsbereich 10. Die dem Saatgutvorratsbehälter 4 zugewandte Seite der Trennwand 32 zu der Wand des Saatgutvorratsbehälters 4 im unteren Bereich des Saatgutschachtes 26 ist unter einem sich nach oben öffnenden Winkel 33 von kleiner als 20° angeordnet. Der Bereich der Trennwand 32, der dem Saatgutschacht 26 zugeordnet ist, ist im Ausführungsbeispiel verstellbar angeordnet, also als Verstellwand 34 ausgebildet. Hierdurch kann die Stellung dieses Bereiches 34 der Trennwand 32 zum Saatgutschacht 26 verändert werden. Der Bereich dieser Trennwand 32 kann dann so eingestellt werden, dass die dem Saatgutschacht 26 zugewandten Seite der Trennwand 32 zur Wand des Saatgutvorratsbehälters im unteren Bereich des Saatgutschachtes 26 zumindest annähernd parallel verlaufend zueinander angeordnet sind. Der verstellbar angeordnete Teilbereich der Trennwand 32, die dem Saatgutschacht 26 benachbart ist, bildet somit die Verstellwand 34.

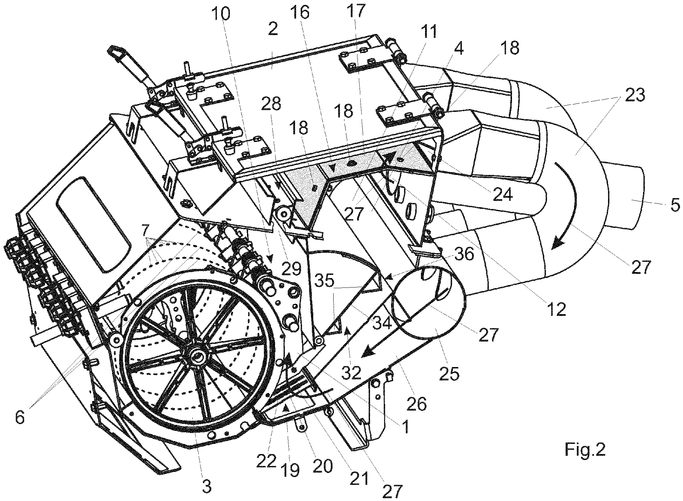

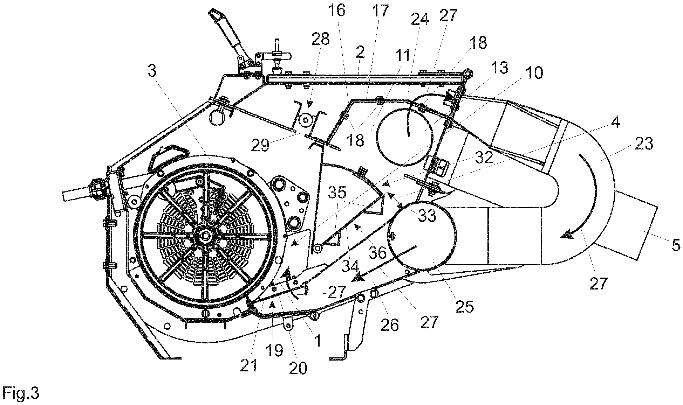

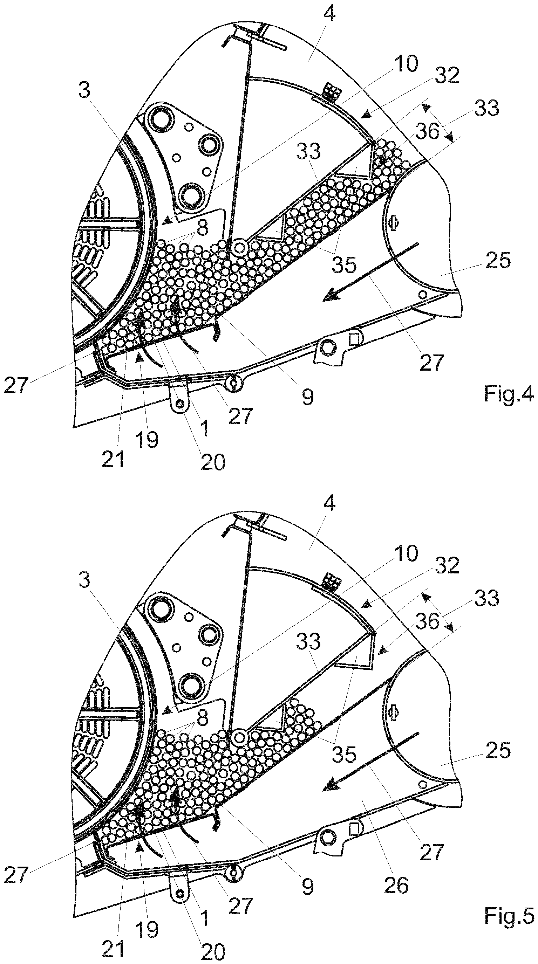

Auf der dem Saatgutschacht 26 zugewandten Seite der Verstellwand 34 der Trennwand 32 sind im Ausführungsbeispiel gemäß Figur 2-5 zumindest annähernd horizontale verlaufende Längserhebungen 35 angeordnet, die eine sogenannte Saatgutbremse 36 bilden, um den Fluss des Saatgutes aus dem oberen Bereich des Vorratsbehälters 4 in den Vereinzelungsbereich 10 abzubremsen. Diese Längserhebungen 35 sind als den Saatgutfluss bremsende Vorrichtungen und/oder Elemente und hier als Erhebungen ausgebildet. Durch die verstellbar angeordnete Verstellwand 34 kann der Querschnitt des Saatgutschachtes 26 eingestellt und/oder verstellt werden.

Durch diese der Saatgutfluss bremsende Vorrichtungen 36 wird verhindert, dass das Saatgut von der Druckluft durch den Saatgutschacht 26, wenn nur noch eine geringe Höhe Saatgut im Saatgutschacht 26 "steht", zu der Vereinzelungstrommel 3 durchgedrückt wird. Hierdurch wird die Saatgutvereinzelung und die gewünschte Einzelanlagerung der Saatkörner an den Perforationen 7 der Vereinzelungstrommel 3 begünstigt.

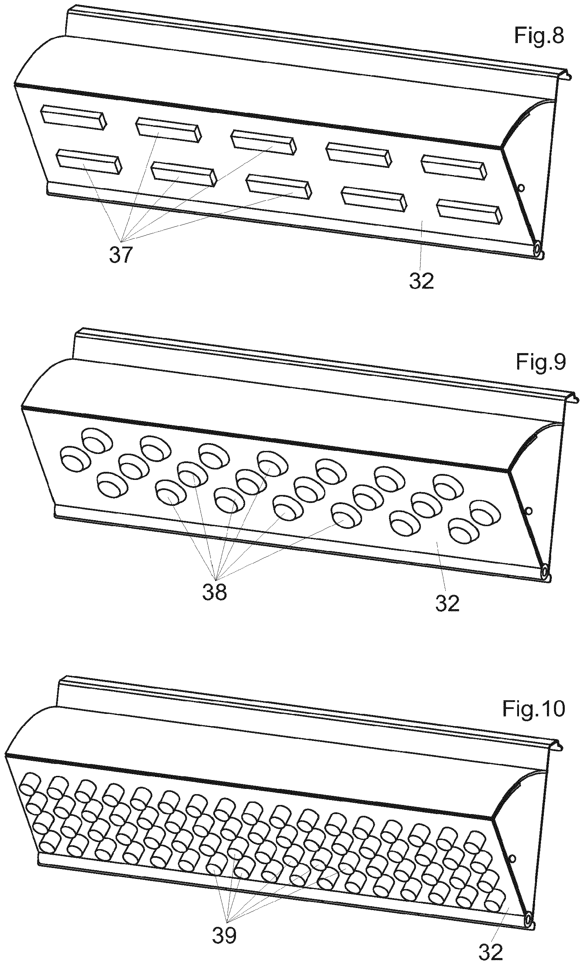

Die in den Fig. 8 bis 10 dargestellten Trennwände 32 mit den Saatgutfluss bremsende Elemente 37, 38, 39 unterscheiden sich von den Saatgutfluss bremsende Elemente 35 gemäß den Fig. 2 - 5 durch eine andere Ausgestaltung der Saatgutfluss bremsende Elemente.

Die Saatgutfluss bremsende Elemente gemäß Fig. 8 sind als balkenartige Erhebungen 37 ausgebildet.

Die Saatgutfluss bremsende Elemente gemäß Fig. 9 sind als zylinderstumpfförmige Erhebungen 38 ausgebildet.

Die Saatgutfluss bremsende Elemente gemäß Fig. 10 sind als zylinderförmige Erhebungen 39 ausgebildet.

## Patentansprüche

1. Pneumatische Einzelkornsämaschine mit einem Nachfüllsystem für zumindest einem mit einem Überdruck beaufschlagten, einen Saatgutvorratsbehälter aufweisenden Vereinzelungsgehäuse einer landwirtschaftlichen Einzelkornsämaschine, wobei dem Vereinzelungsgehäuse zumindest eine mit einer Druckdifferenz beaufschlagte Vereinzelungstrommel zugeordnet ist, wobei die Vereinzelungstrommel in Perforationsreihen angeordnete Perforationen aufweist, an denen sich die Saatkörner bei der Durchführung der Perforationen durch den Saatgutvorratsbehälterbereich anlagern, wobei dem Vereinzelungsgehäuse mittels zumindest einer pneumatisch beaufschlagten und oberhalb des Saatgutvorratsbehälterbereiches im Vereinzelungsgehäuse ausmündenden Nachfüllleitung das sich in einem Vorratsbehälter befindliche Saatgut zugefördert wird, **dadurch gekennzeichnet, dass** über die pneumatische Nachfüllleitung (5) ein ständig aufrechterhaltener Überdruck in dem Vereinzelungsbereich (10) des Vereinzelungsgehäuses (2) erzeugt wird, so dass über die Nachfüllleitung (5) in ununterbrochener Weise zumindest teilweise die an den Perforationen (7) der Vereinzelungstrommel (3) anliegende Druckdifferenz erzeugbar ist, dass dem Vereinzelungsgehäuse (2) eine Vorrichtung (21, 22) zur Erzeugung eines Fließbettes des Saatgutes zumindest im unteren Anlagerungsbereich des Saatgutes an der Vereinzelungstrommel (3) zugeordnet ist, dass von dem Bereich oberhalb der Einmündung der Nachfüllleitung (5) in den Vorratsbehälter (4) eine mit Druckluft aus dem Vorratsbehälterbereich und/oder Nachfüllleitung (5) beaufschlagte Verbindungsleitung (23) zu der Vorrichtung (21, 22) zur Erzeugung des Fließbettes des Saatgutes führt, dass der Bereich, in dem die die Vereinzelungstrommel (3) angeordnet ist, durch eine Trennwand (16), der zumindest ein einstellbares Ventilelement (28, 31) zugeordnet ist, von Saatgutvorratsbehälterbereich im oberen Bereich des Vereinzelungsgehäuses (2) getrennt ist.

2. Einzelkornsämaschine nach zumindest einem der vorstehenden Ansprüche, **dadurch gekennzeichnet, dass** das Ventilelemente (28) als zumindest eine um eine Achse (30) verschwenkbare Drosselklappe (31) ausgebildet ist.

3. Einzelkornsämaschine nach zumindest einem der vorstehenden2 Ansprüche, **dadurch gekennzeichnet, dass** das Ventilelemente als Schieberventil ausgebildet ist.
